# EUROPEAN PATENT APPLICATION

(11) **EP 4 607 438 A1**
(43) Date of publication of application: **27.08.2025**
(21) Application number: 25159729.0
(22) Date of filing: 24.02.2025
(51) Int. Cl.: G06Q 50/00, H04L 51/52, H04L 67/306

(54) **ELECTRONIC COMMUNICATION SYSTEM AND METHOD FOR PROVIDING RECOMMENDED MODE OF COMMUNICATION**

(30) Priority: 23.02.2024 US 202418586053
(71) Applicant: Mitel Networks Corporation, Ottawa, Ontario K2K 3K1 (CA)
(72) Inventor: PEISKER, Patrick, 560077 Bengaluru (IN)
(74) Representative: McDougall, James

(57) **Abstract**

Electronic communication methods and systems for automatically determining and ranking recommended modes and/or other factors of communication are provided. The methods and systems can include analyzing historical communication data for one or more participants. The method can further include comparing normalized historical data to user preference information.

## Description

### FIELD OF THE INVENTION

The present disclosure generally relates to electronic communication methods and systems. More particularly, examples of the disclosure relate to electronic communication methods and systems suitable for providing one or more preferred modes, times, or the like of communication to one or more users.

### BACKGROUND OF THE DISCLOSURE

Electronic communication devices, such as computers, mobile phones, tablets, and the like allow for various modes of electronic communication between users or participants of electronic communication systems. For example, the electronic devices can be used to send email, make phone calls, send text messages, chat, collaborate, or use other modes of communication between two or more devices. Such variety of modes of communication can lead to confusion and missed or delayed communications, because various users may not know preferred or recommended modes of communication for other participants of the electronic communication and/or preferred or recommended times or days for the communication.

With prior systems and methods, a user may simply choose a mode of communication and attempt to initiate an electronic communication, with no deference to preferred modes of communication of the other participants in the communication. In some environments, such as corporate or other enterprise environments, presence information, such as Available or Busy status on chat tools may be available, but such information provides only static information-the status labels don't allow users to communicate or take into consideration variations in human behavior and schedule to provide recommended modes and/or times for a communication. Accordingly, improved electronic communication systems and methods are desired.

Any discussion of problems provided in this section has been included in this disclosure solely for the purposes of providing a background for the present invention and should not be taken as an admission that any or all of the discussion was known at the time the invention was made.

### SUMMARY

A first aspect of this disclosure provides an electronic communication method comprising the steps of: collecting historical communication information for a participating user; using a data collection and normalization engine, normalizing the historical communication information for the participating user to provide normalized participating user information; collecting user preference information for the participating user; storing the normalized participating user information in a database; storing the user preference information for the participating user in the database; using a data service module, accessing the normalized user information and generating ranking information comprising recommended modes of communication for the participating user; and sending one or more recommended modes of communication to an initiating user.

The step of collecting may comprise collecting data from two or more modes of communication for the participant.

The modes of communication may comprise one or more of: phone calls, chat, email, text, electronic meeting, electronic collaboration, social media, video, or augmented reality.

The user preference information may comprise ranked recommended modes of communication.

The user preference information may comprise a recommended mode of communication based on one or more of: an identifier of the initiating user, an identifier of the participating user, a day, a time of day, a location of the participating user, a sentiment of a user, a location of the initiating user, or a topic.

The step of sending the one or more recommended modes of communication may comprise sending two or more ranked recommended modes of communication.

The data service module may determine a ranked recommended mode of communication based on one or more of: an identifier of the initiating user, a day, a time of day, a location of the participating user, a location of the initiating user, a topic, an identifier of the participating user, preference of the initiating user, or preference of the participating user.

The electronic communication method may further comprise sending a recommended time for communication.

The electronic communication method may further comprise a step of automatically connecting an initiating user device to a communication with a participant user device at a recommended time.

The electronic communication method may further comprise using a recommendation engine to compare the user preference information and the ranking information to generate the one or more recommended modes of communication.

The method may further comprise, using an initiating user device, initiating a communication between the initiating user device and a participating user device.

The method may further comprise automatically connecting the initiating user device to a communication with the participating user device using a highest ranked recommended mode of communication.

The method may further comprise parsing the historical communication information for a participating user into segments.

The step of sending one or more recommended modes of communication may comprise sending a recommended mode and a recommended type of communication.

A second aspect of this disclosure provides an electronic communication system comprising: a data collection and normalization engine configured to receive historical participant user communication information and to normalize the historical participant user communication information to provide normalized participating user information; a database comprising the normalized participating user information and participant user preference information; a data service module configured to receive the normalized participating user information and to generate ranking of recommended modes of communication information for the participating user based on the normalized participating user information; and a recommendation engine to receive the ranking of recommended modes of communication information and the participant user preference information and to provide a recommended mode of communication to an initiating user device.

The data collection and normalization engine may reside on a communication server.

The data service module may reside on a communication server.

The recommendation engine may reside on a communication server.

The electronic communication system may further comprise a sentiment analysis engine to determine a sentiment of the communication information for the participating user.

A third aspect of this disclosure provides an electronic communication method comprising: collecting communication information for a participating user, the communication information comprising a plurality of modes of communication and one or more types of communication for each mode; using a data collection and normalization engine, normalizing the communication information for the participating user to provide normalized participating user information; collecting user preference information for the participating user; storing the normalized user information in a database; storing the user preference information in the database; using a data service module, accessing the normalized user information and generating ranking information of recommended modes of communication for the participating user and ranking information of recommended types of communication for the participating user; comparing the ranking information of recommended modes of communication and the ranking information of recommended types of communication for the participating user to the preference information; and sending a recommended mode and type of communication to an initiating user device.

### BRIEF DESCRIPTION OF THE DRAWING FIGURES

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 illustrates an electronic communication method in accordance with exemplary embodiments of the disclosure.
FIG. 2 illustrates an electronic communication system in accordance with exemplary embodiments of the disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present disclosure.

### DETAILED DESCRIPTION OF EXEMPLARY EMBODIMENTS

The description of exemplary embodiments of the present disclosure provided below is merely exemplary and is intended for purposes of illustration only; the following description is not intended to limit the scope of the invention disclosed herein. Moreover, recitation of multiple embodiments having stated features is not intended to exclude other embodiments having additional features or other embodiments incorporating different combinations of the stated features.

As set forth in more detail below, embodiments of the disclosure relate to electronic communication systems and methods. The electronic communication systems and methods can be used in a variety of applications, such as personal, educational and/or work communications, and can use one or more of a variety of communication modes.

Exemplary methods and systems employ a data-driven approach for recommending a preferred mode, time, or the like for a communication. The exemplary methods and systems can access, store, and review historical communications and information from a variety of communication modes for one or more participating users to determine and provide recommend modes and/or times of communication for each participating user. This may involve machine learning to predict the best or most desirable conditions (e.g., mode, time, etc.) for the communication. The systems and methods can use the historic communication logs to, for example, recommend optimal mode of communication and/or time to reach a user or a (e.g., common purpose) group of users. The methods and systems can provide personalized, dynamic recommendations for communications using multi-modal communication systems. By way of examples, the systems and methods can consolidate metrics, such as event types, direction of communication, timeslots, days, and user preferences to output a recommended mode for communication and/or time and date of a communication to one or more participants/users. Although described below in the context of communications between an initiating user and one or more participants, in some cases, the system and/or method can be used to broadcast information to one or more users. For example, in an educational institution or other enterprise, the system and/or method can be used to determine a mode and/or time to broadcast a message to faculty, staff, and/or students and/or others.

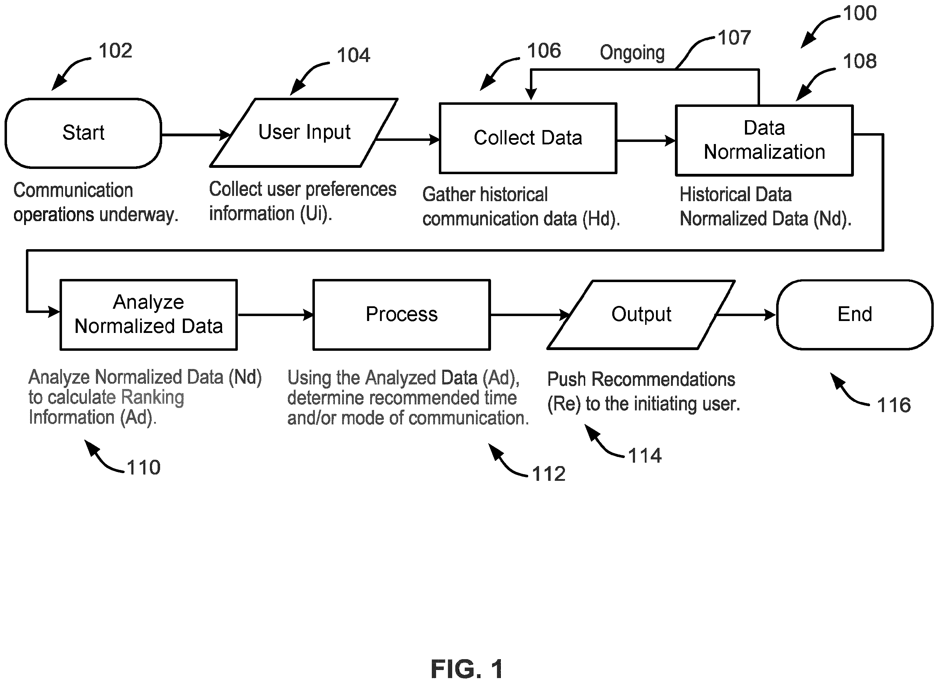

Turning now to the figures, FIG. 1 illustrates an electronic communication method 100 in accordance with exemplary embodiments of the disclosure. For illustration purposes, method 100 is described in the context of a communication between a user or participating user and an initiating user. However, unless otherwise noted, systems and methods in accordance with embodiments of the disclosure are not so limited. Exemplary methods and systems can be used to electronically communicate with multiple (e.g., participating) users.

Method 100 includes a start step 102, a user input step 104, a data collection step 106, a data normalization step 108, a data analyzing step 110, a processing step 112, a push recommendation step 114, and end step 116.

During step 102, a communication operation or method is initiated. Step 102 can include, for example, retrieving a communication application or client, such as a phone, chat, email, text, electronic meeting, electronic collaboration, social media, video, or augmented reality application. By way of example, a communication can be between an initiating user (a user who initiates a communication) and one or more participating users. In some cases, step 102 can include initiating a communication application to enter information, such as communication information described below. In some cases, step 102 includes initiating a communication between the initiating user device and a participating user device.

At step 104, user preference information for one or more (e.g., each) participating user is entered. During this step, a user (e.g., a participating or initiating user) can use an application or client on a corresponding user device to provide user preference information. The user preference information can include, for example, a user identification, preferred (e.g., ranked) modes of communication, preferred (e.g., ranked) times of communication (which may correspond to one or more modes of communication-e.g., one more modes of communication may be preferred or higher ranked at certain times of day or on certain days), location of a user or user device, a (e.g., participating or initiating) user sentiment, a location of the initiating user, a topic, or the like. In this context, exemplary modes of communication can include one or more of: phone calls, chat, email, text, electronic meeting, electronic collaboration, social media, video, or augmented reality; types of communication can correspond to a particular application or platform that is used for the mode of communication. For example, for a phone call, the type can be a mobile call, a voice over internet call, a Plain Old Telephone Service call, a private branch exchange (PBX) call, or the like. Types of text modes can include, for example, short message service (SMS), multimedia messaging service (MMS), instant messaging, push notifications, in-app messaging, or the like. The provided user preference information can then be stored in one or more databases. Location information can include time zone information or can be used to calculate a time zone to account for time zone adjustments and can include information, such as whether connected to an enterprise network within a building or premise associated with a particular enterprise. The user input can be input using a survey on a client or application or can be a setting on a device or the system.

During step 106, historical communication information (Hd) for one or more users (e.g., each user) is collected (e.g., using a data collection and normalization engine, as described below). The historical communication information can include, for example, modes, types, times, and/or other factors described below and elsewhere herein of communication for each user. The modes and times can correspond to each other and/or to, for example, an identifier of the initiating user, an identifier of the participating user, day, a time of day, a location of the participating user, a sentiment of a user, a location of the initiating user, a topic, or the like. By way of examples, the step of collecting communication information for a participating user includes collecting a plurality of modes of communication and one or more types of communication for each mode. Data collected during step 106 can include:
Event Type (e.g., type of call, collaboration, chat, meeting)
Direction (Outbound or Inbound)
Timeslot (e.g., normalized to 15 min slots in a 24-hour window)
Day (Monday through Sunday)
Disposition (Answered, Unanswered, Rejected, Forwarded)
Location (In Office, At Home, On the Road, On Leave)

The historical communication information can be collected during a communication and/or can be (e.g., periodically) pulled from one or more user devices and/or one or more communication services, such as a PBX server, a text server, a social media server, an email server, or the like. In accordance with examples of the disclosure, the step of collecting includes collecting data from two of more modes of communication for the participant.

During step 108, the historical data collected during step 106 can be normalized. During this process, time can be parsed or segmented into, for example, blocks of time, such as morning and afternoon, or 15 minute segments (e.g., 2 pm to 2:15 pm), 30 minute segments, 1 hour segments, two hour segments, or the like. Location information can be segmented into segments, such as home, work, in transit, or the like. Method 100 can also suitably include storing the normalized participating user information in the database.

As illustrated, steps 106 and 108 can be repeated a number of times (loop 107). Loop 107 can repeat each time historical information is received and/or can be repeated at predetermined intervals-e.g., every 2 hours, once a day, or the like. The normalized data can then be stored in one or more databases.

During step 110, the normalized data (which can be pulled from one or more databases) is used to generate ranking information that includes recommended modes of communication for the participating user(s). The ranking information can include, for example, a ranking of each mode of communication, each type of communication, day, time, location of one or more users, a sentiment of one or more users, and one or more topics. By way of example, during step 110, a data service module can be used to access the normalized user information (e.g., from a database) and generate ranking information of recommended modes of communication for the participating user and ranking information of recommended types of communication for the participating user(s)-e.g., based on one or more of: an identifier of the initiating user, day, a time of day, a location of the participating user, a location of the initiating user, a topic, an identifier of the participating user, preference of the initiating user, preference of the participating user, and/or other factor noted herein. For example, a most common time, day, and mode for a successful communication can be determined for each user during step 110 to generate ranked information. The ranked information can be stored in the database.

During step 112, the ranking information is accessed (e.g., from the database) and compared to user preference information collected during step 104 (e.g., using a data service module) to generate one or more recommended modes of communication and/or one or more times for a communication. During step 112, user preference information collected during step 104 may be given greater weight than the historical communication information. For example, the user preference information for each user may be given 1.5, 2, 3, 5, or 10 times more weight than the normalized participating user information. As explained in more detail below, in some cases, method 100 includes using a recommendation engine to compare the user preference information and the ranking information to generate the one or more recommended modes of communication. For a group of users, the preference may be weighted by rank within an organization or enterprise. E.g., if a CEO prefers a certain time and mode, those factors may be given additional weight.

During step 114, one or more (e.g., two or more) recommended modes of communication and optionally other (e.g., ranked) recommended information (e.g., type of communication, time for the communication, and/or other factors) are sent/pushed to a user device, such as an initiation user device. Once the recommendations are pushed, the recommendations can be displayed on an initiating user's device, and such information can be used to (e.g., automatically) initiate or schedule a communication. The process can end at step 116.

In some cases, the initiating user can select from a list of recommended modes (and/or types) of communication and times of communication to connect the initiating user device to an electronic communication with the participating user device(s). In some cases, method 100 can automatically create a calendar invitation for the participating user and the initiating user to connect to an electronic communication at a later time and/or date. In some cases, method 100 can automatically connect to electronic communication between a participating user device and an initiating user device when one or more of the devices is in a predefined location or connected to a particular server. In some cases, the method includes a step of automatically connecting an initiating user device to a communication with a participant user device at a recommended time. In some cases, method 100 includes automatically connecting the initiating user device to a communication with the participating user device using a highest ranked recommended mode and/or at a highest ranked time of communication. Or the system can send a message to one or more users with the highest ranked time and mode of communication. Each user can then accept or decline or propose a new time for the communication.

While the method has been primarily described using a 1:1 communication, the method can be applied to a 1 to many communication by combining the analyzed data for each participant user.

An exemplary method can be summarized as:
1. Gather past communication data Hd
2. Take Hd and normalize values for each block of time and corresponding day of week information.
3. Analyze Nd for each user calculating success % and/or rank each mode, day, time, and location.
4. Use Ad to predict which communication mode or list of modes has the highest likelihood for success in the current user context. E.g., use the current user context (time, day of week, available modes) and compare the context with Ad to calculate a predicted success % based on Ad success %. List communication modes by predicted success % highlighting user preferred mode to connect based on Ad success %.
5. Push resulting Gr to initiating user.

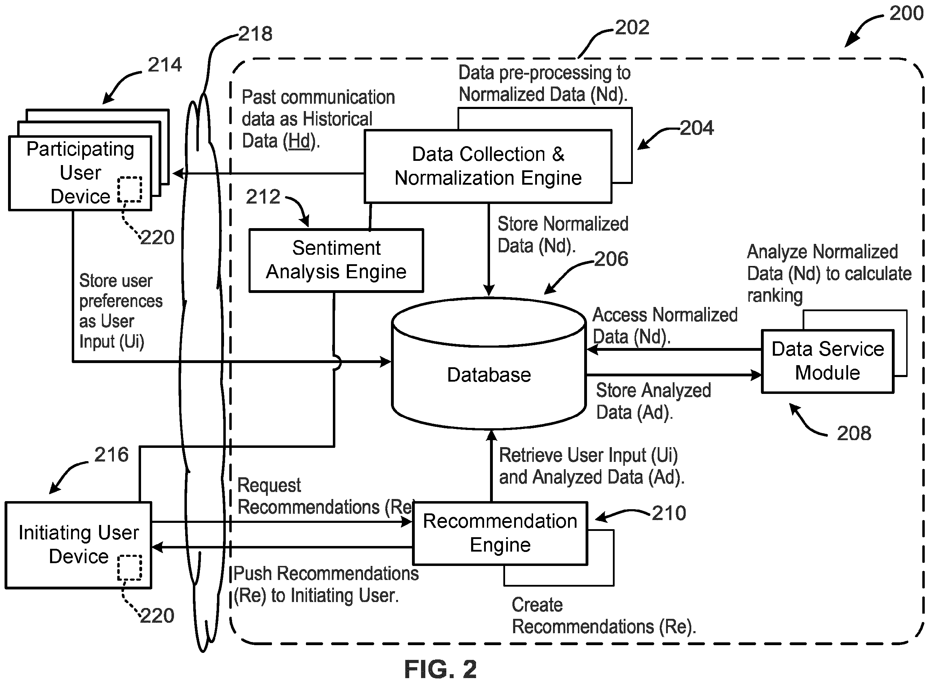

FIG. 2 illustrates an electronic communication system 200 in accordance with further examples of the disclosure. Electronic communication system 200 can be used to, for example, perform a method, such as method 100, described herein.

In the illustrated example, electronic communication system 200 includes a data collection and normalization engine 204, one or more databases 206, a data service module 208, and a recommendation engine 210. One or more of data collection and normalization engine 204, one or more databases 206, data service module 208, and recommendation engine 210 can reside on one or more servers, generally illustrated with dashed lines and reference number 202. Electronic communication system 200 can be coupled to one or more participating user devices 214 and an initiating user device 216-e.g., via a network 218.

Devices 214, 216 can be or include any suitable device with wired or wireless communication features and that can connect to network 218 and/or communication server(s) 202. For example, one or more of devices 214, 216 can be or include a wearable device, a tablet computer, a wired phone, a mobile phone, a personal (e.g., laptop or desktop) computer, a streaming device, such as a game console or other media streaming device, or the like. One or more of devices 214, 216 can include an application or client 220 to perform various functions set forth herein and/or to cause to be displayed text and/or other information as described herein. By way of example, an application or client 220 can display requests for users to enter user preference information, display ranked recommended modes of communication, ranked recommended times of communication, and the like as described herein. Further, an application or client 220 can include a button next to each ranked time or mode of communication to allow a user to connect to an electronic communication or the application may automatically connect devices 216 to an electronic communication using the highest ranked mode at the highest ranked time-if not immediately.

Network 218 can include or be, for example, an internet protocol (IP) network. Exemplary types of networks suitable for communication with network 218 can be or include a local area network, a wide-area network, a metropolitan area network, one or more wireless networks, or a portion of the Internet. Various components of network 218 can be coupled to one or more other components using an Ethernet connection, other wired connections, and/or wireless interfaces. Network 218 can be coupled to other networks and/or to other devices typically coupled to networks. By way of particular example, network 218 includes a communication network and network 218 can be coupled to additional networks that can be coupled to one or more devices, such as devices 214 and 216. Exemplary additional networks can include a network similar to network 218, a public switched telephone network (PSTN), or the like.

Server 202 can be or include any suitable server. Server 202 can perform various functions as described herein. For example, server 206 can provide electronic communication (e.g., audio, video, text, and/or email) links between device 216 and one or more devices 214. In accordance with an example of the disclosure, server 202 includes a private branch exchange (PBX) server.

As noted above, server 202 can include various engines, database(s), and/or modules as described herein. Alternatively, one or more of the engines, database(s), and/or modules as described herein can be coupled to server 202. The terms engine and module may be used interchangeably.

As used herein, "module" or "engine" can refer to computer program instructions, encoded on computer storage medium for execution by, or to control the operation of, data processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices).

Data collection and normalization engine 204 is configured to receive historical participant user communication information (e.g., received during step 106) and to normalize the historical participant user communication information to provide normalized participating user information. The historical participant user communication information can be normalized as described above.

Database(s) 206 can include one or more devices, such as computers or servers (or portion(s) thereof), to store information. By way of examples, database 206 can use one or more of Microsoft SQL Server, MySQL, Microsoft Access, Oracle, or the like relational database systems. In accordance with examples of the disclosure, database(s) 206 can include or store the normalized participating user information (e.g., received from data collection) and normalization engine 204 and participant user preference information (e.g., received during step 104).

Data service module 208 is configured to receive the normalized participating user information (e.g., from database(s) 206) to generate ranking of recommended modes of communication information and/or other ranked information for the participating user based on the normalized participating user information. In some cases, data service module 208 can determine a confidence percentage associated with each mode and/or type of communication, and preferred time of communication based on the (historical) normalized participating user information. The ranking of recommended modes of communication information and/or other ranked information can be stored in database 206.

Recommendation engine 210 is configured to receive the ranking of recommended modes of communication information (e.g., from database 206) and the participant user preference information (e.g., from database 206) and to provide a recommended mode of communication to initiating user device 216.

In some cases, electronic communication system 200 includes a sentiment analysis engine 212 to determine a sentiment of the communication information for the participating user and/or the initiating user. Sentiment analysis can be used to enhance a quality of communication based on sentiment and/or on optical circadian rhythms of communication. The determined sentiment information can be stored in database 206 and can be used by recommendation engine 210 to determine recommended mode, time, or the like of a communication. For example, if a user is angry now or has a history of being unhappy at certain times of a day or during certain days, recommendation engine 210 may avoid recommending a communication during those days or times.

Sentiment analysis engine 212 can analyze the transcribed information and/or the audio information during calls, from recorded calls, or from written materials to determine sentiment information. For example, sentiment analysis engine 212 can review audio and/or transcribed information and determine sentiment based on matching predefined words or phrases with words or terms stored in a database, such as database 206 or another database. The matching need not be with identical terms. The match can be to synonyms stored within the database. Additionally or alternatively, a loudness or a change in loudness (e.g., 10 decibels or more or 15 decibels or more) can be used to determine a sentiment, such as anger or frustration. In some cases, sentiment analysis engine 212 can perform machine learning and update words, phrases, and/or the like associated with the words and phrases based on the learning.

Similarly, system 200 can use machine learning to predict preferred modes, times, or the like of communications between two or more users.

The present invention has been described above with reference to a number of exemplary embodiments and examples. It should be appreciated that the particular embodiments shown and described herein are illustrative of the invention and its best mode and are not intended to limit in any way the scope of the invention as set forth in the claims. The features of the various embodiments may stand alone or be combined in any combination. Further, unless otherwise noted, various illustrated steps of a method can be performed sequentially or at the same time, and not necessarily be performed in the order illustrated. It will be recognized that changes and modifications may be made to the exemplary embodiments without departing from the scope of the present invention. These and other changes or modifications are intended to be included within the scope of the present invention, as expressed in the following claims.

## Claims

1. An electronic communication method comprising the steps of:
collecting historical communication information for a participating user;
using a data collection and normalization engine, normalizing the historical communication information for the participating user to provide normalized participating user information;
collecting user preference information for the participating user;
storing the normalized participating user information in a database;
storing the user preference information for the participating user in the database;
using a data service module, accessing the normalized user information and generating ranking information comprising recommended modes of communication for the participating user; and
sending one or more recommended modes of communication to an initiating user.

2. The electronic communication method of claim 1, wherein the step of collecting comprises collecting data from two or more modes of communication for the participant and optionally wherein the modes of communication comprise one or more of: phone calls, chat, email, text, electronic meeting, electronic collaboration, social media, video, or augmented reality.

3. The electronic communication method of claim 1 or claim 2, wherein the user preference information comprises ranked recommended modes of communication.

4. The electronic communication method of any preceding claim, wherein the user preference information comprises a recommended mode of communication based on one or more of: an identifier of the initiating user, an identifier of the participating user, a day, a time of day, a location of the participating user, a sentiment of a user, a location of the initiating user, or a topic.

5. The electronic communication method of any preceding claim, wherein the step of sending the one or more recommended modes of communication comprises sending two or more ranked recommended modes of communication.

6. The electronic communication method of any preceding claim, wherein the data service module determines a ranked recommended mode of communication based on one or more of: an identifier of the initiating user, a day, a time of day, a location of the participating user, a location of the initiating user, a topic, an identifier of the participating user, preference of the initiating user, or preference of the participating user.

7. The electronic communication method of any preceding claim, further comprising sending a recommended time for communication and optionally further comprising a step of automatically connecting an initiating user device to a communication with a participant user device at a recommended time.

8. The electronic communication method of any preceding claim, further comprising using a recommendation engine to compare the user preference information and the ranking information to generate the one or more recommended modes of communication.

9. The method of any preceding claim, further comprising, using an initiating user device, initiating a communication between the initiating user device and a participating user device and optionally further comprising automatically connecting the initiating user device to a communication with the participating user device using a highest ranked recommended mode of communication.

10. The method of any preceding claim, further comprising parsing the historical communication information for a participating user into segments.

11. The method of any preceding claim, wherein the step of sending one or more recommended modes of communication comprises sending a recommended mode and a recommended type of communication.

12. An electronic communication system comprising:
a data collection and normalization engine configured to receive historical participant user communication information and to normalize the historical participant user communication information to provide normalized participating user information;
a database comprising the normalized participating user information and participant user preference information;
a data service module configured to receive the normalized participating user information and to generate ranking of recommended modes of communication information for the participating user based on the normalized participating user information; and
a recommendation engine to receive the ranking of recommended modes of communication information and the participant user preference information and to provide a recommended mode of communication to an initiating user device.

13. The electronic communication system of claim 12, wherein one or more of the data collection and normalization engine, the data service module and the recommendation engine resides on a communication server.

14. The electronic communication system of claim 12 or claim 13, further comprising a sentiment analysis engine to determine a sentiment of the communication information for the participating user.

15. An electronic communication method comprising:
collecting communication information for a participating user, the communication information comprising a plurality of modes of communication and one or more types of communication for each mode;
using a data collection and normalization engine, normalizing the communication information for the participating user to provide normalized participating user information;
collecting user preference information for the participating user;
storing the normalized user information in a database;
storing the user preference information in the database;
using a data service module, accessing the normalized user information and generating ranking information of recommended modes of communication for the participating user and ranking information of recommended types of communication for the participating user;
comparing the ranking information of recommended modes of communication and the ranking information of recommended types of communication for the participating user to the preference information; and
sending a recommended mode and type of communication to an initiating user device.
